# EUROPEAN PATENT APPLICATION

(11) **EP 3 282 746 A1**
(43) Date of publication of application: **14.02.2018**
(21) Application number: 15888314.0
(22) Date of filing: 10.09.2015
(51) Int. Cl.: H04W 28/06

(54) **DATA TRANSMISSION METHOD AND DEVICE**

(30) Priority: 08.04.2015 CN 201510164055
(71) Applicant: ZTE Corporation, Shenzhen, Guangdong 518057 (CN)
(72) Inventor: WANG, Xin, Shenzhen, Guangdong 518057 (CN)
(74) Representative: Studio Torta S.p.A.
(86) International application number: PCT/CN2015/089381
(87) International publication number: WO 2016/161761

(57) **Abstract**

Provided are a data transmission method and device. The data transmission method comprises: receiving, by one or more intermediate nodes in an ultra-dense network, user plane data transmitted by a first node; and forwarding, by the one or more intermediate nodes, the user plane data to a second node. The present invention addresses the problem in the related art of how to efficiently and reliably transmit the user plane data in a multi-hop scene in the ultra-dense network, thereby efficiently transmitting the user plane data in the multi-hop scene in the ultra-dense network.

## Description

### TECHNICAL FIELD

The present disclosure relates to communication technical field, and more particularly, to methods and devices for transmitting data.

### BACKGROUND

With the proliferation of mobile communications, wireless mobile service volume is expected to grow thousands of times over the next decade, and the current macro-cell-based cellular wireless access networks are clearly unable to provide communication capacity to meet such a huge demand for mobile services. At present, Ultra Dense Networks (UDNs) are deemed by the industry as main drive that can meet such huge service needs.

The UDNs achieve the growth of network capacity by increasing the network node deployment density. The network node refers to the Radio Access Network node (RAN-node), which specifically refers to an access device which is capable of enabling User Equipment (UE) to access networks via wireless communication links. For example, a base station (eNB), a Low Power Node (LPNs) or an Access Point (AP) all belong to the RAN-node. The intensive deployment of the above RAN-nodes narrows the distances between UE and the RAN-nodes. The short-distance communication on the one hand ensures high reliability of the communication links and, on the other hand, can improve the spectrum multiplexing efficiency in a certain area, thereby further enlarging the network capacity. At the same time, the short-distance communication allows millimeter waves to be used in UDNs, and the networks use rich frequency resources of the millimeter waves to obtain bigger bandwidth, thereby further improving the communication capacity.

While UDNs are used to improve network capacity, future networks do not want to increase capital expenditure (CAPEX) and operating expenses (OPEX) of networks, which means that the deployment of UDNs needs reduced man-made planning, optimization and management, and instead flexible and rapid deployment may be achieved in indoor or outdoor hot spot areas or areas having large service volume according to network topologies, network load, service requirements and so on, and self-configuration, self-optimization and self-healing can also be achieved. To accomplish all of these goals, the industry generally believes that UDNs need to use wireless backhaul, rather than accessing a core network device and realizing communications between RAN-nodes via a wired connection (i.e., wired backhaul, for example, via optical fibers or cables). That is, the UDNs realize communications between RAN-nodes via wireless connections.

In a certain deployment area, there may be at most one RAN-node that communicates with a core network device through a wired interface. For UE that accesses other RAN-node cells, the downlink data from the core network to the UE has to reach the connected RAN-node through the wired interface, and the RAN-node sends the downlink data to the other RAN-nodes through a wireless interface so as to make the data finally reach the UE. As can be seen that, in a particular area of a UDN, data usually needs to be transmitted to UE through transmissions by two or more RAN-nodes, i.e., multi-hop data transmission is needed.

As to the problem in the ultra dense networks of how to effectively and reliably transmit user plane data in a multi-hop scenario, there is no effective solutions in related arts.

### SUMMARY

Embodiments of the present disclosure provide a method and device for transmitting data, in order to at least solve the problem in the ultra dense networks of how to effectively and reliably transmit user plane data in a multi-hop scenario.

According to an aspect of embodiments of the present disclosure, there is provided a method for transmitting data. The method includes the following steps. One or more intermediate nodes in an ultra dense network receives user plane data sent from a first node. The one or more intermediate nodes forwards the user plane data to a second node.

According to an exemplary embodiment, the receiving, by one or more intermediate nodes in an ultra dense network, user plane data sent from a first node, comprises: receiving, by a designated intermediate node in the one or more intermediate nodes, the user plane data sent from the first node; transmitting, by the designated intermediate node, the user plane data hop by hop to a next hop intermediate node in the intermediate nodes until a next hop node of the next hop intermediate node is the second node. If there are a plurality of intermediate nodes, the designated intermediate node refers to an intermediate node which is closest to the first node, and an intermediate node which is not closest to the first node receives the data sent from a previous hop intermediate node. Only the intermediate node which is closest to the second node sends the data to the second node; other intermediate nodes send data to a next hop intermediate node.

According to an exemplary embodiment, the forwarding, by the one or more intermediate nodes, the user plane data to a second node, comprises: sending, by the intermediate nodes, the user plane data from the first node in series until the user plane data is sent to the second node.

According to an exemplary embodiment, before the one or more intermediate nodes forward the user plane data to the second node, the method further comprises: obtaining, by the one or more intermediate nodes, indication information for indicating transmission of the user plane data to a next hop from an Internet Protocol (IP) layer of a protocol stack of a user plane, or obtaining, by the one or more intermediate nodes, the indication information from a wireless protocol stack of a user plane.

According to an exemplary embodiment, the obtaining, by the one or more intermediate nodes, indication information for indicating transmission of the user plane data to a next hop from an IP layer of a protocol stack of a user plane, comprises: obtaining, by the one or more intermediate nodes, the indication information from the IP layer of the user plane which is configured by a network; or the obtaining, by the one or more intermediate nodes, the indication information from a wireless protocol stack of a user plane, comprises: obtaining, by the one or more intermediate nodes, the indication information from identification of a next hop node in the one or more intermediate nodes.

According to an exemplary embodiment, the forwarding, by the one or more intermediate nodes, the user plane data to a second node, comprises: according to a second General Packet Radio Service Tunneling Protocol (GTP) tunnel corresponding to a first GTP tunnel, sending, by the one or more intermediate nodes, the user plane data to the second node. The first GTP tunnel is a tunnel which encapsulates a GTP bearer of user equipment, and the second GTP tunnel is a tunnel which encapsulates a GTP bearer of the second node.

According to an exemplary embodiment, a corresponding relation between the first GTP tunnel and the second GTP tunnel is configured by the first node.

According to another aspect of embodiments of the present disclosure, there is provided a method for transmitting data. The method include the following step. A first node in an ultra dense network sends user plane data to one or more intermediate nodes. The one more intermediate nodes are used for forwarding the user plane data to a second node.

According to another aspect of embodiments of the present disclosure, there is provided a method for transmitting data. The method includes the following step. A second node in an ultra dense network receives user plane data from one or more intermediate nodes. The one or more intermediate nodes are used for receiving the user plane data from a first node. According to another aspect of embodiments of the present disclosure, there is provided a device for transmitting data. The device is applied in one or more intermediate nodes. The device includes a receiving module and a forwarding module. The receiving module is configured to receive, in an ultra dense network, user plane data sent from a first node. The forwarding module is configured to forward the user plane data to a second node.

According to an exemplary embodiment, the forwarding module is further configured to, according to a second General Packet Radio Service Tunneling Protocol (GTP) tunnel corresponding to a first GTP tunnel, send the user plane data to the second node. The first GTP tunnel is a tunnel which encapsulates a GTP bearer of user equipment, and the second GTP tunnel is a tunnel which encapsulates a GTP bearer of the second node.

According to an exemplary embodiment, a corresponding relation between the first GTP tunnel and the second GTP tunnel is configured by the first node.

According to another aspect of embodiments of the present disclosure, there is provided a device for transmitting data. The device is applied in a first node. The device includes a sending module. The sending module is configured to send, in an ultra dense network, user plane data to one or more intermediate nodes. The one more intermediate nodes are used for forwarding the user plane data to a second node.

According to another aspect of embodiments of the present disclosure, there is provided a device for transmitting data. The device is applied in a second node. The device includes a receiving module. The receiving module is configured to receive, in an ultra dense network, user plane data from one or more intermediate nodes. The one or more intermediate nodes are used for receiving the user plane data from a first node.

In embodiments of the present disclosure, one or more intermediate nodes in an ultra dense network receives user plane data sent from a first node, and the one or more intermediate nodes forwards the user plane data to a second node. Thus, the present disclosure solves the related-art problem in the ultra dense networks of how to effectively and reliably transmit user plane data in a multi-hop scenario. Consequently, the present disclosure can effectively transmit user plane data in a multi-hop scenario in ultra dense networks.

### BRIEF DESCRIPTION OF THE DRAWINGS

Drawings, which constitute a part of the present disclosure, are provided for facilitating understanding of embodiments of the present disclosure. The exemplary embodiments of the present disclosure and descriptions thereof are illustrative of the present disclosure, but are not intended to unduly limit the scope of the present disclosure.
Fig. 1 is a flowchart showing a method for transmitting data according to an embodiment of the present disclosure.
Fig. 2 is a block diagram showing a device for transmitting data according to an embodiment of the present disclosure.
Fig. 3 is a flowchart showing a method for transmitting data according to an embodiment of the present disclosure.
Fig. 4 is a block diagram showing a device according to an embodiment of the present disclosure.
Fig. 5 is a flowchart showing a method for transmitting data according to an embodiment of the present disclosure.
Fig. 6 is a block diagram showing a device according to an embodiment of the present disclosure.
Fig. 7 is a schematic diagram showing a scenario which technical solutions provided by embodiments of the present disclosure can be applied in.
Fig. 8 is a schematic diagram showing architecture for transmitting user plane data according to an embodiment of the present disclosure.
Fig. 9 is a schematic diagram showing a protocol stack of network architecture according to an embodiment of the present disclosure.
Fig. 10 is a schematic diagram showing a mode of a protocol stack according to an embodiment of the present disclosure.
Fig. 11 is a schematic diagram showing mapping of data bearers according to an embodiment of the present disclosure.
Fig. 12 is a schematic diagram showing a mode of a protocol stack according to an embodiment of the present disclosure.

### DETAILED DESCRIPTION

The present disclosure will be described with reference to drawings and exemplary embodiments. It should be noted that embodiments and features in embodiments can be combined if no conflictions are caused.

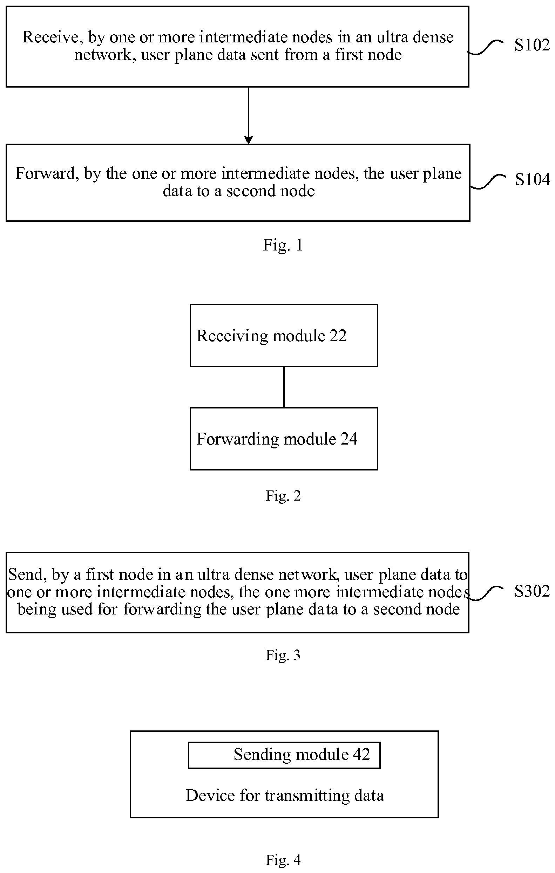

An embodiment of the present disclosure provides a method for transmitting data. Fig. 1 is a flowchart showing a method for transmitting data according to an embodiment of the present disclosure. As shown in Fig. 1, the flowchart includes the following steps.

In step S102, one or more intermediate nodes in an ultra dense network receive user plane data sent from a first node.

In step S104, the one or more intermediate nodes forward the user plane data to a second node.

The first node may be a host node, and there exists a wired interface S1 between the host node and a core network device. Or, the first node may be a serving node, and there exists a wireless Uu interface in existing standards between the serving node and a terminal. The second node may be a host node or a serving node. If the first node is a host node, the second node is a serving node. Alternatively, if the second node is a host node, the first node is a serving node. By the above steps, in an ultra dense network scenario, there are one or more intermediate nodes between the first node and the second node for transmitting data between the first node and the second node. Thus, the embodiment can solve the related-art problem in the ultra dense networks of how to effectively and reliably transmit user plane data in a multi-hop scenario. Consequently, the present embodiment can effectively transmit user plane data in a multi-hop scenario in ultra dense networks.

There may be a plurality of intermediate nodes between the first node and the second node. The transmission between the plurality of intermediate nodes and the first node or other intermediate nodes may be parallel or serial transmission. According to an exemplary embodiment, a designated intermediate node in the one or more intermediate nodes receives the user plane data sent from the first node, and the designated intermediate node transmits the user plane data hop by hop to a next hop intermediate node in the intermediate nodes until a next hop node of the next hop intermediate node is the second node. The intermediate nodes may send the user plane data from the first node in series until the user plane data is sent to the second node. Thus, the intermediates nodes receive the user plane data sent from the first node and send the user plane data to the second node in series.

In order to transmit the user plane data effectively and accurately, routing indication information may be used to provide guidance. According to an exemplary embodiment, before the one or more intermediate nodes forward the user plane data to the second node, the one or more intermediate nodes obtains indication information for indicating transmission of the user plane data to a next hop from an Internet Protocol (IP) layer of a protocol stack of a user plane, or obtain the indication information from a wireless protocol stack of a user plane. According to an exemplary embodiment, the obtaining, by the one or more intermediate nodes, indication information for indicating transmission of the user plane data to a next hop from an IP layer of a protocol stack of a user plane, comprises: obtaining, by the one or more intermediate nodes, the indication information from the IP layer of the user plane which is configured by a network. Or, the obtaining, by the one or more intermediate nodes, the indication information from a wireless protocol stack of a user plane, comprises: obtaining, by the one or more intermediate nodes, the indication information from identification of a next hop node in the one or more intermediate nodes.

According to an exemplary embodiment, during the forwarding of the user plane data to the second node by the one or more intermediate, according to a second General Packet Radio Service Tunneling Protocol (GTP) tunnel corresponding to a first GTP tunnel, the one or more intermediate nodes send the user plane data to the second node. The first GTP tunnel is a tunnel which encapsulates a GTP bearer of user equipment, and the second GTP tunnel is a tunnel which encapsulates a GTP bearer of the second node.

According to an exemplary embodiment, a corresponding relation between the first GTP tunnel and the second GTP tunnel is configured by the first node.

An embodiment of the present disclosure provides a device for transmitting data. The device is configured to realize the above exemplary embodiment, and repeated descriptions are omitted here. As used below, the term "module" may refer to a combination of software and/or hardware capable of realize specific function. Although the device described below is optionally implemented by software, hardware or a combination of software and hardware can be devised to implement the device.

Fig. 2 is a block diagram showing a device for transmitting data according to an embodiment of the present disclosure. The device is applied in one or more intermediate nodes. As shown in Fig. 2, the device includes a receiving module 22 and a forwarding module 24. The receiving module 22 is configured to receive, in an ultra dense network, user plane data sent from a first node. The forwarding module 24 is configured to forward the user plane data to a second node.

According to an exemplary embodiment, the forwarding module is further configured to, according to a second General Packet Radio Service Tunneling Protocol (GTP) tunnel corresponding to a first GTP tunnel, send the user plane data to the second node. The first GTP tunnel is a tunnel which encapsulates a GTP bearer of user equipment, and the second GTP tunnel is a tunnel which encapsulates a GTP bearer of the second node.

According to an exemplary embodiment, a corresponding relation between the first GTP tunnel and the second GTP tunnel is configured by the first node.

An embodiment of the present disclosure provides another method for transmitting data. Fig. 3 is a flowchart showing a method for transmitting data according to an embodiment of the present disclosure. As shown in Fig. 3, the flowchart may include the following step.

In step S302, a first node in an ultra dense network sends user plane data to one or more intermediate nodes. The one more intermediate nodes are used for forwarding the user plane data to a second node.

The first node may be a host node, and there exists a wired interface S1 between the host node and a core network device. Or, the first node may be a serving node, and there exists a wireless Uu interface in existing standards between the serving node and a terminal. By the above step, in an ultra dense network scenario, there are one or more intermediate nodes between the first node and the second node for transmitting data between the first node and the second node. Thus, the embodiment can solve the related-art problem in the ultra dense networks of how to effectively and reliably transmit user plane data in a multi-hop scenario. Consequently, the present embodiment can effectively transmit user plane data in a multi-hop scenario in ultra dense networks.

An embodiment of the present disclosure provides a device for transmitting data. The device is configured to realize the above exemplary embodiment, and repeated descriptions are omitted here. As used below, the term "module" may refer to a combination of software and/or hardware capable of realize specific function. Although the device described below is optionally implemented by software, hardware or a combination of software and hardware can be devised to implement the device.

Fig. 4 is a block diagram showing a device for transmitting data according to an embodiment of the present disclosure. The device is applied in a first node. As shown in Fig. 4, the device includes a sending module 42. The sending module 42 is configured to send, in an ultra dense network, user plane data to one or more intermediate nodes. The one more intermediate nodes are used for forwarding the user plane data to a second node.

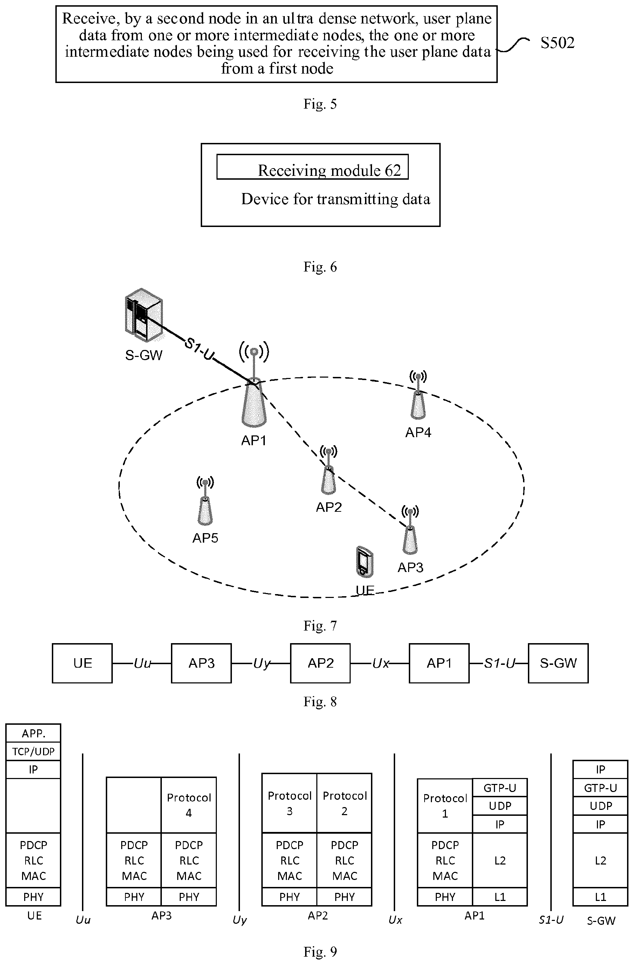

An embodiment of the present disclosure provides another method for transmitting data. Fig. 5 is a flowchart showing a method for transmitting data according to an embodiment of the present disclosure. As shown in Fig. 5, the flowchart includes the following step.

In step S502, a second node in an ultra dense network receives user plane data from one or more intermediate nodes. The one or more intermediate nodes are used for receiving the user plane data from a first node.

The first node may be a host node, and there exists a wired interface S1 between the host node and a core network device. Or, the first node may be a serving node, and there exists a wireless Uu interface in existing standards between the serving node and a terminal. By the above step, in an ultra dense network scenario, there are one or more intermediate nodes between the first node and the second node for transmitting data between the first node and the second node. Thus, the embodiment can solve the related-art problem in the ultra dense networks of how to effectively and reliably transmit user plane data in a multi-hop scenario.

Consequently, the present embodiment can effectively transmit user plane data in a multi-hop scenario in ultra dense networks.

An embodiment of the present disclosure provides a device for transmitting data. The device is configured to realize the above exemplary embodiment, and repeated descriptions are omitted here. As used below, the term "module" may refer to a combination of software and/or hardware capable of realize specific function. Although the device described below is optionally implemented by software, hardware or a combination of software and hardware can be devised to implement the device.

Fig. 6 is a block diagram showing a device for transmitting data according to an embodiment of the present disclosure. The device is applied in a second node. As shown in Fig. 6, the device includes a receiving module 62. The receiving module 62 is configured to receive, in an ultra dense network, user plane data from one or more intermediate nodes. The one or more intermediate nodes are used for receiving the user plane data from a first node.

In view of the above problem existing in related arts, the present disclosure will be described with reference specific embodiments. In the embodiments described below, the above exemplary embodiments or implementations are combined.

An example scenario in which the technical solutions provided by embodiments of the present can be found in Fig. 7. In a certain area, five Aps (AP1, to AP5) are intensively deployed. The APs may be access devices of various types and are equivalent of RAN-nodes. In the embodiment, AP1 to AP5 collectively constitute a group.

In the group, there is a wired interface S1-U between AP1 and a Serving Gateway (S-GW) device in a core network, and user plane data transmitted between UE which accesses the group and the network are delivered via the S1-U interface. AP1 to AP5 may communicate with each other via a wireless interface. The coverage range of an AP is limited, and if there is no direct interface between an AP and a core network device, the communications between AP2 to AP5 and the network are delivered by AP1, i.e., AP1 is equal to an entry or exit node between the group and the core network.

For example, for UE which accesses the cell of AP3, the data transmission path is as shown in Fig. 8, which is also a schematic diagram showing a multi-hop network structure which the embodiment of the present disclosure is applied in. AP 1 is an access network node and there is a wired interface S1 between AP1 and a core network device. In the above group, AP1 is referred to as a host node. AP3 is an access node for the UE, and there is a wireless interface Uu as described in existing standards between AP3 and the UE. In the above group, AP3 is referred to as a serving node. There are wireless interfaces Ux and Uy established between AP2 and the host node and between AP2 and the serving node, respectively. AP2 bridges the communications between the serving node and the host node and is referred to as an intermediate node in the above group. Ux and Uy may be the same or not, depending on whether the protocol stack modes of the opposite nodes on the interfaces are the same.

Fig. 9 shows a protocol stack mode of the above network architecture. There is a user plane protocol stack of existing interface S1 between AP1 and S-GW, an underlying layer of the protocol stack uses a wired interface protocol (Layer 1/Layer 2, L1/L2) to perform link transmission, and an upper layer encapsulates data packets in a General Packet Radio Service (GPRS) Tunneling Protocol User plane (GTP-U) for transmission. There is an existing interface Uu protocol stack between UE and AP3, and data packets encapsulated by Packet Data Convergence Protocol (PDCP) are transmitted based on the protocol stack. Ux and Uy are wireless interfaces, and the underlying layer of Ux and Uy transmits PDCP data packets, and the upper layer protocol stack may be implemented in various manners. Accordingly, the functions of the nodes in the group may be implemented in various manners.

For a UE GTP bearer of the UE in the access group, the above system architecture establish two GTP tunnels: one is similar with GTP-U established between S-GW and eNB in existing technologies, and is established between S-GW and AP1 in the present disclosure; the other one is established between AP1 and the access node for UE (for example, AP3). AP1 is responsible for the one-to-one mapping of the two tunnels.

On the other hand, for AP3, AP1 is equal to a S-GW, and thus there is established an AP3 GTP tunnel between AP1 and AP3 for carrying AP3 GTP-U bearer. It can be deemed that what the AP3 GTP bearer carries is the data of the UE GTP bearer. The mapping principle of the two bearers may be designated by a P-GW which provides services for the UE, or may be managed by AP1 itself. For example, with the service attributes of a bearer as a mapping principle, for GTP bearers of all UEs which access AP3, if the service attributes of the above UE GTP bearers are the same, they will be mapped into the same AP3 GTP-U bearer.

In the transmission aspect, AP1 processes the encapsulated GTP data packets using a wireless protocol (the encapsulated GTP data packets are referred to as PDCP data packet, and are carried by an AP2 radio bearer) and sends the processed data packets to a next destination node (for example, AP2) via the interface Ux.

AP2 (which is equal to an intermediate node) is responsible for delivery of data between the host node AP1 and the access node AP3, and does not perform decapsulation/encapsulation of GTP level with respect to the data packets of the AP3 GTP bearer/UE GTP bearer. For the data packets of the UE, the function of AP2 is to perform transmission over wireless links, for example, the AP decapsulates the data packets of the AP2 radio bearer received via the interface Ux using a wireless protocol configuration at the receiving end, and encapsulates the data packets using a wireless protocol configuration at the sending end for further transmission, carries the above data packets on the AP3 radio bearer, and sends the data packets to AP3 via the interface Uy. The AP2 radio bearer is mapped onto the AP3 radio bearer one to one. The establishment of the radio bearers and related protocol configurations are performed as indicated by control plane signaling when the GTP bearers are established. According to an exemplary embodiment, for the bearer of the UE, AP2 also configures an IP layers on the wireless protocol stack, and the receipt address/destination address of the IP layer is configured by a routing protocol of the network. For the data packets received over the interface Ux, AP2 determines the next hop destination node according to the indication of the IP layer.

AP3 (which is equal to an access node) is based on the same specifications as that of relay nodes in existing standards.

The present disclosure will be described with reference to different embodiments.

### Embodiment 1

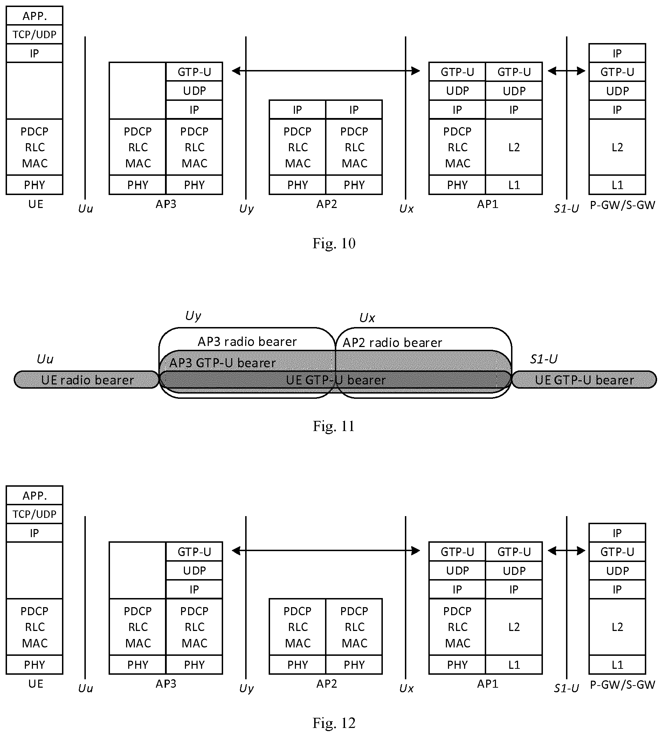

From the point of node roles, in one group, a host node plays both roles of an S-GW and a Home eNB Gateway (H-GW) for other APs in the group, and an intermediate node provides routing services for transmissions. The protocol stack mode is shown in Fig. 10. With reference to the schematic diagram of bearer mapping as shown in Fig. 11, transmission of downlink data in a multi-hop environment under such configuration mode of node functions will be described below in detail.

In step 1, at a P-GW which provides services for the UE, the downlink data packets of the UE are divided into a corresponding Evolved Packet System (EPS) bearer according to a certain data packet filtering rule, and encapsulated into respective GTP tunnels for transmission. The GTP tunnels are established on the wired interface S1-U between the P-GW/S-GW and the host node AP1, and carry the UE GTP-U bearer.

In step 2, AP1 divides the arrived data packets into corresponding AP2 radio bearers (AP2 is adjacent to AP1 but is not a current access node for the UE, i.e., AP2 is equal to an intermediate node) according to a particular parameter (for example, a service level) of the UE bearer and maps the GTP tunnel between P-GW/S-GW and AP1 as an AP3 GTP tunnel one to one. The AP3 GTP tunnel is established on a wireless tunnel between the host node AP1 and the serving node AP3 of the UE and carries the UE GTP-U bearer. AP1 carries the data packets of the UE on the AP2 radio bearer, encapsulates the data packets according to a wireless protocol and sends the data packets via the interface Ux, and the data packets are routed to AP2 according to the Internet Protocol (IP) protocol.

The EPS bearers of UEs which access the group are assembled at AP1, and when an intermediate node or a serving node of a UE is AP2, EPS bearers having the same particular parameter (for example, service level) are mapped onto the same AP2 radio bearer.

In step 3, according to the routing configured by a data bearer, AP2 encapsulates the data packets (including the destination addresses of the data packets, which point to AP3) of the AP2 radio bearer received from the interface Ux according to a wireless protocol and sends the data packets to AP3 via the interface Uy. That is to say, the function of AP2 is to route and forward and perform transmissions over wireless links.

According to an exemplary embodiment, AP2 may be configured with the S-GW function of the serving node AP3. Under such configuration, from the point of the protocol stack, the protocol stack is still as shown in Fig. 4, but AP2 performs additional processes inside itself: AP2 maps the UE bearer into AP3 bearer. The mapping rule may be designated by the P-GW/S-GW which provides services for the UE. After mapping, AP2 encapsulates the AP3 bearer into a second section GTP tunnel, performs encapsulation using a wireless protocol and sends the AP3 bearer.

In step 4, the serving node AP3 decapsulates corresponding data packets from the AP3 radio bearer based on the UE GTP bearer, and sends the data packets the UE via the interface Uu according to existing technologies.

### Embodiment 2

From the point of node roles, in one group, a host node plays both roles of an S-GW and a Home eNB Gateway (H-GW) for other APs in the group, and an intermediate node enables transmission of data packets over wireless links. The protocol stack mode is shown in Fig. 12. Transmission of downlink data in a multi-hop environment under such configuration mode of node functions will be described below in detail.

In step 1, at a P-GW which provides services for the UE, the downlink data packets of the UE are divided into a corresponding Evolved Packet System (EPS) bearer according to a certain data packet filtering rule, and encapsulated into respective GTP tunnels for transmission. The GTP tunnels are established on the wired interface S1-U between the P-GW/S-GW and the host node AP1, and carry the UE GTP-U bearer.

In step 2, AP1 divides the arrived data packets into corresponding AP2 radio bearers according to a particular parameter (for example, a service level) of the UE bearer and maps the GTP tunnel between P-GW/S-GW and AP1 as an AP3 GTP tunnel one to one. The AP3 GTP tunnel is established on a wireless tunnel between the host node AP1 and the serving node AP3 of the UE and carries the UE GTP-U bearer. Over the interface Ux, AP1 maps the data packets of the UE onto the AP2 radio bearer according to the bearer attribute of the data packets, encapsulates the data packets according to a wireless protocol and sends the data packets.

The EPS bearers of UEs which access the group are assembled at AP1, and when an intermediate node or a serving node of a UE is AP2, EPS bearers having the same particular parameter (for example, service level) are mapped onto the same AP2 radio bearer. Furthermore, AP1 adds identification of a next hop target node (for example, ID of AP3) into the AP2 radio bearer so that AP2 can know the target node.

In step 3, for the bearer in which AP2 is configured as an intermediate node and the next end point is AP3, AP2 maps the data packets of the bearer received from the interface Ux into the AP3 radio bearer one to one, encapsulates the data packets according to a wireless protocol, and sends the data packets to AP3 via the interface Uy according to the decapsulated information of the target node (or destination node). That is to say, the function of AP2 is to perform transmissions over wireless links.

In step 4, the serving node AP3 decapsulates corresponding data packets from the AP3 radio bearer based on the UE GTP bearer, and sends the data packets to the UE via the interface Uu according to existing technologies.

In view of the above, the present disclosure provides a solution as to how to effectively transmit user plane data in a multi-hop scenario in an ultra dense network. The present disclosure is applicable to wireless access network nodes of various types, and impose no influences on core network nodes and UEs. The path of the user plane data of the present disclosure is not long, and the processes at base station nodes are relatively simple. Thus, the present disclosure can effectively and reliably transmit user plane data and meet user requirements.

An exemplary embodiment of the present disclosure provides software which is configured to realize the technical solutions according to the above embodiments.

An exemplary embodiment of the present disclosure provides a storage medium, and the above software is stored in the storage medium. The storage medium includes but is not limited to: optical disk, floppy disk, hard disk, erasable memory and so on.

It is apparent to those skilled in this art that individual modules or steps of the present disclosure may be implemented by general-purpose computing devices, which can be integrated onto a single computing device, or distributed over a network composed of a plurality of computing devices. According to an exemplary embodiment, the modules or steps may be implemented by program codes which are executable by computing devices. The program codes may be stored in a storage device for execution by computing devices. In some cases, the illustrated or described steps may be performed in an order different from that described herein, or may be made as integrated circuit modules, or a plurality modules or steps among the modules or steps described herein may be made as a single integrated circuit module. The present disclosure is not limited to any specific combination of hardware and software.

Exemplary embodiments of the present disclosure are described above, and these embodiments are not intended to limit the present disclosure. For those skilled in this art, various changes and modifications can be made to the present disclosure. Any modification, equivalent substitutions, improvements within the spirit and principle of the present disclosure should be encompassed in the scope of the present disclosure.

### Industrial Applicability

Embodiments of the present disclosure may be applied in communication technical field. The present disclosure can solve the problem in ultra dense networks of how to effectively and reliably transmit user plane data in a multi-hop scenario. Thus, by the present disclosure, user plane data can be transmitted effectively in ultra dense networks in a multi-hop scenario.

## Claims

1. A method for transmitting data, comprising:
receiving, by one or more intermediate nodes in an ultra dense network, user plane data sent from a first node; and
forwarding, by the one or more intermediate nodes, the user plane data to a second node.

2. The method according to claim 1, wherein the receiving, by one or more intermediate nodes in an ultra dense network, user plane data sent from a first node, comprises:
receiving, by a designated intermediate node in the one or more intermediate nodes, the user plane data sent from the first node;
transmitting, by the designated intermediate node, the user plane data hop by hop to a next hop intermediate node in the intermediate nodes until a next hop node of the next hop intermediate node is the second node.

3. The method according to claim 1, wherein the forwarding, by the one or more intermediate nodes, the user plane data to a second node, comprises:
sending, by the intermediate nodes, the user plane data from the first node in series until the user plane data is sent to the second node.

4. The method according to claim 1, wherein, before the one or more intermediate nodes forward the user plane data to the second node, the method further comprises:
obtaining, by the one or more intermediate nodes, indication information for indicating transmission of the user plane data to a next hop from an Internet Protocol (IP) layer of a protocol stack of a user plane, or obtaining, by the one or more intermediate nodes, the indication information from a wireless protocol stack of a user plane.

5. The method according to claim 4, wherein:
the obtaining, by the one or more intermediate nodes, indication information for indicating transmission of the user plane data to a next hop from an IP layer of a protocol stack of a user plane, comprises: obtaining, by the one or more intermediate nodes, the indication information from the IP layer of the user plane which is configured by a network; or
the obtaining, by the one or more intermediate nodes, the indication information from a wireless protocol stack of a user plane, comprises: obtaining, by the one or more intermediate nodes, the indication information from identification of a next hop node in the one or more intermediate nodes.

6. The method according to claim 1, wherein the forwarding, by the one or more intermediate nodes, the user plane data to a second node, comprises:
according to a second General Packet Radio Service Tunneling Protocol (GTP) tunnel corresponding to a first GTP tunnel, sending, by the one or more intermediate nodes, the user plane data to the second node, wherein the first GTP tunnel is a tunnel which encapsulates a GTP bearer of user equipment, and the second GTP tunnel is a tunnel which encapsulates a GTP bearer of the second node.

7. The method according to claim 6, wherein a corresponding relation between the first GTP tunnel and the second GTP tunnel is configured by the first node.

8. A method for transmitting data, comprising:
sending, by a first node in an ultra dense network, user plane data to one or more intermediate nodes, wherein the one more intermediate nodes are used for forwarding the user plane data to a second node.

9. A method for transmitting data, comprising:
receiving, by a second node in an ultra dense network, user plane data from one or more intermediate nodes, wherein the one or more intermediate nodes are used for receiving the user plane data from a first node.

10. A device for transmitting data, applied in one or more intermediate nodes, wherein the device comprises:
a receiving module configured to receive, in an ultra dense network, user plane data sent from a first node; and
a forwarding module configured to forward the user plane data to a second node.

11. The device according to claim 10, wherein the forwarding module is further configured to, according to a second General Packet Radio Service Tunneling Protocol (GTP) tunnel corresponding to a first GTP tunnel, send the user plane data to the second node, wherein the first GTP tunnel is a tunnel which encapsulates a GTP bearer of user equipment, and the second GTP tunnel is a tunnel which encapsulates a GTP bearer of the second node.

12. The device according to claim 11, wherein a corresponding relation between the first GTP tunnel and the second GTP tunnel is configured by the first node.

13. A device for transmitting data, applied in a first node, wherein the device comprises:
a sending module configured to send, in an ultra dense network, user plane data to one or more intermediate nodes, wherein the one or more intermediate nodes are used for forwarding the user plane data to a second node.

14. A device for transmitting data, applied in a second node, wherein the device comprises:
a receiving module configured to receive, in an ultra dense network, user plane data from one or more intermediate nodes, wherein the one or more intermediate nodes are used for receiving the user plane data from a first node.
